**Europäisches Patentamt**

(19) **European Patent Office**

**Office européen des brevets**

(11) Veröffentlichungsnummer: **0 262 444**
**B1**

(12) # EUROPÄISCHE PATENTSCHRIFT

(45) Veröffentlichungstag der Patentschrift:
**22.11.90**

(51) Int. Cl.⁵: **F16B 13/08**

(21) Anmeldenummer: **87112872.4**

(22) Anmeldetag: **03.09.87**

(54) **Verankerungselement, insbesondere Dübel.**

(30) Priorität: **03.10.86 DE 3633628**

(43) Veröffentlichungstag der Anmeldung:
**06.04.88 Patentblatt 88/14**

(45) Bekanntmachung des Hinweises auf die Patenterteilung:
**22.11.90 Patentblatt 90/47**

(84) Benannte Vertragsstaaten:
**CH DE FR GB IT LI**

(56) Entgegenhaltungen:
**EP-A- 007 386**
**DE-A- 1 400 857**
**DE-A- 2 554 851**
**DE-A- 2 916 737**
**DE-U- 1 864 882**
**DK-A- 69 211**
**GB-A- 2 109 886**
**US-A- 3 107 570**

(73) Patentinhaber: **ROBERT BOSCH GMBH, Postfach 50,**
**D-7000 Stuttgart 1(DE)**

(72) Erfinder: **Baumann, Otto, Weingartenstrasse 24,**
**D-7022 Leinfelden-Echterdingen(DE)**
Erfinder: **Müller, Rolf, Manosquerstrasse 21,**
**D-7022 Leinfelden-Echterdingen(DE)**
Erfinder: **Reibetanz, Wilbert, Keltenstrasse 5,**
**D-7022 Leinfelden-Echterdingen(DE)**
Erfinder: **Wanner, Karl, Dr., Moltkestrasse 10,**
**D-7022 Leinfelden-Echterdingen(DE)**

ACTORUM AG

## Beschreibung

Die Erfindung bezieht sich auf ein Verankerungselement der im Oberbegriff des Patentanspruchs 1 genannten Art.

Es ist ein Verankerungselement dieser Art bekannt (GB-A 2 109 886), bei dem der Abstützkörper dort, wo der Konus seinen größten Durchmesser hat, an das axiale Ende des Konus einstückig anschließt. Der Abstützkörper ist aus einem Zylinder gebildet, wobei dessen Länge das 0,3 bis 1-fache und dessen Durchmesser das 0,5 bis 1-fache des Durchmessers des Bolzens betragen soll. Dadurch soll in dem Bereich, der vom Umfang des Abstützkörpers und dem radial darüber hinausragenden vorderen axialen Ende des Konus und ferner vom Bohrlochgrund des Bohrloches begrenzt ist, ein Spanraum geschaffen sein, der das beim Einschlagen der Schlaghülse in die Bohrung ausgeräumte Wandungsmaterial der Bohrung aufnehmen soll, so daß das abgetragene, im Bohrloch verbleibende Wandungsmaterial kein Hindernis beim Einschlagen der Schlaghülse bildet. Der im Verhältnis zur dicksten Stelle des Konus im Durchmesser wesentlich kleinere Abstützkörper wirkt im Bereich eines kegelförmigen Bohrlochgrundes mit seiner darauf abgestützten vorderen Ringkante wie eine Schneide. Beim Einschlagen der Schlaghülse, die dabei mit ihren Zungen auf den Konus aufgleiten soll, was eine zuverlässige Axialabstützung des Bolzens bedingt, ist aufgrund dieses Abstützkörpers damit zu rechnen, daß der Bolzen mit dem Abstützkörper in den Bohrlochgrund eingetrieben wird, und dabei so weit, bis der Konus mit seinem vorderen, im Querschnitt größten Ende bis zum übrigen Bereich des Bohrlochgrundes gelangt. Dann wird der ohnehin schon recht kleine Aufnahmeraum praktisch bis hin zu Null reduziert, so daß das im Bohrloch verbleibende abgetragene Material nicht ausweichen kann, sondern statt dessen das Eintreiben der Schlaghülse blockiert. Überdies ist die Zentrierung des Bolzens im Bohrloch unzulänglich und nicht auszuschließen, daß beim Einschlagen der Schlaghülse der Bolzen um den endseitigen Abstützkörper aus der Mitte heraus in eine Schrägstellung geschwenkt wird und gleichzeitig sich die Schlaghülse ausmittig weiter eingräbt. Außerdem bedingt das bekannte Verankerungselement, daß die Bohrung im Betonteil in Abstimmung an die Längenabmessungen des Verankerungselementes möglichst präzise auf die geforderte Tiefe gebohrt wird; denn ist die Bohrlochtiefe nicht exakt an die Länge der Schlaghülse angepaßt und z.B. nicht exakt tief genug gebohrt, so steht dann, wenn beim Einschlagen der Schlaghülse deren Zungen mit ihrem freien Ende in den Axialbereich der dicksten Stelle des Konus gelangt sind, das gegenüberliegende Ende der Schlaghülse störend vor. Eine Beseitigung durch stärkeres weiteres Einschlagen der Schlaghülse ist nicht möglich. Der Außendurchmesser der Schlaghülse ist deutlich größer als derjenige des Bolzens an dessen dickster Stelle, nämlich am querschnittsgrößten Ende des Konus. Somit muß der Durchmesser der Bohrung im Beton in Anpassung an diesen Außendurchmesser erheblich größer als der größte Durchmesser des Bolzens gewählt werden. Dies ergibt ein ungünstiges Verhältnis zwischen belastbarem Querschnitt des Bolzens und Bohrlochgröße.

Der Erfindung liegt die Aufgabe zugrunde, ein Verankerungselement der im Oberbegriff des Patentanspruchs 1 definierten Art zu schaffen, bei dem der Spanraum eine fest vorgegebene und bleibende Größe hat und mit dieser beim Einschlagen im wesentlichen voll zur Materialaufnahme wirksam bleibt.

Die Aufgabe ist bei einem Verankerungselement der eingangs genannten Art gemäß der Erfindung durch die Merkmale im Kennzeichnungsteil des Patentanspruchs 1 gelöst. Durch den axial zwischen dem Abstützkörper und dem Konus angeordneten Kopfteil ist ein Toleranzausgleich ermöglicht; denn die Schlaghülse kann je nach den Gegebenheiten mehr oder weniger tief und so weit eingeschlagen werden, daß die freien Enden der Zungen über den dicksten Bereich des Konus hinaus und in den Axialbereich des Kopfteiles gelangen können, durch den dafür ausreichender Axialraum geschaffen ist. Dadurch kann auch in Fällen, wo sonst die Schlaghülse außen überstehen würde, die Schlaghülse noch so weit eingeschlagen werden, bis ein bündiger Abschluß des Schlaghülsenendes mit der Bauwerksfläche erreicht ist. Bei der Herstellung der Bohrung muß somit nicht exakt eine vorgegebene Mindesttiefe eingehalten werden. Der Bolzen ist durch den Abstützkörper, dessen Abstützfläche und Durchmesser im wesentlichen der Geometrie des Bohrlochgrundes entsprechend, großflächig und sicher am Bohrlochgrund abgestützt und dort zentriert. Dadurch ist dem entgegengewirkt, daß der Bolzen unter der Wirkung der Schlagkräfte im Bereich des Bohrlochgrundes sich weiter in die Bohrung eingraben könnte. Selbst wenn dies je nach Material geschehen sollte, hat dies keine Verringerung des für die Aufnahme des ausgeräumten Wandungsmaterials vorhandenen Spanraumes zur Folge; denn dadurch, daß der Spanraum durch die rotationssymmetrische Eintiefung im Kopfteil, der sich im Axialbereich zwischen dem Abstützkörper und dem Konus befindet, gebildet ist, verändern sich Größe und Fassungsvermögen dieses Spanraumes auch dann nicht, wenn der Bolzen tiefer in die Bohrung als gewünscht eindringen sollte. Auch dann bleibt nach wie vor der zwischen Bohrlochwandung und Eintiefung des Kopfteiles gebildete definierte Freiraum als Spanraum für das ausgeräumte Wandungsmaterial erhalten. Somit ist jede Gefahr gebannt, daß sich beim Einschlagen der Schlaghülse abgeräumtes Wandungsmaterial vor der Schlaghülse staut, sich dem Einschlagen widersetzen und dieses je nachdem völlig blockieren könnte. Statt dessen ist ein gleichmäßiger, relativ widerstandsarmer Abraum des abgetragenen Wandungsmaterials mit Aufnahme nicht nur in den Schlitzen zwischen den Zungen der Schlaghülse sondern auch im durch die Eintiefung im Kopfteil vorgegebenen Spanraum ermöglicht. Selbst wenn der Bolzen sich noch weiter in die Bohrung eingraben sollte, kann die Schlaghülse erforderlichenfalls auch weiter axial eingeschlagen werden, ohne Größe und Aufnahmevermögen des Spanraumes zu beeinflussen. Die Schlaghülse kann mit den freien Enden ihrer Zungen axial über den im Querschnitt größten Bereich des Konus hinwegreichen und in den Axialbereich des Kopfteiles gelangen, ohne die Gefahr, daß dies durch etwaiges abgetragenes und komprimiertes Wandungsmaterial oder etwa durch einen nahen Bohrlochgrund blockiert wäre. Selbst wenn die Schlaghülse axial so tief wie möglich eingeschlagen ist, ist praktisch ausgeschlossen, daß die Enden ihrer Zungen bereits am Bohrlochgrund anschlagen. Durch das erfindungsgemäße Verankerungselement ist somit auch erreicht, daß die Belastung des Materials, insbesondere des Betonteiles, in das das Verankerungselement eingesetzt wird, reduziert ist. Dies hat den Vorteil, daß das Verankerungselement auch noch in schmale Teile, z.B. in Platten, Treppenwangen oder dgl., eingesetzt werden kann, ohne daß die Gefahr besteht, daß das Material dieser Teile seitlich ausbricht, reißt oder dgl. Schaden nimmt. Bei allem ist das Setzen des erfindungsgemäßen Verankerungselementes außerordentlich einfach, schnell und zuverlässig möglich.

Es ist ein Verankerungselement bekannt (EP- A-DO 7386), bei dem eine mit geschlitzten Zungen versehene Spreizhülse mit den freien Enden ihrer Zungen auf einen Konus eines Spreizkörpers aufgleiten kann, der mit einem kegelförmigen Ende am Bohrlochgrund abgestützt ist, wobei die Abstützfläche und der Durchmesser dieses kegelförmigen Abstützendes der Geometrie des Bohrlochgrundes entsprechen. Bei diesem Verankerungselement besteht die Gefahr, daß beim Einschlagen der Schlaghülse diese im Bohrloch klemmt, wobei insbesondere etwaiges abgetragenes Wandungsmaterial mangels vorhandener Spanräume im Bohrloch verbleibt und sich zu einem festen Pfropfen verdichten kann, der das Einschlagen der Schlaghülse blockiert.

Es ist ferner ein Verankerungselement bekannt (US-A 3 107 570), bei dem die Schlaghülse ein Innengewinde für einen Einschraubbolzen aufweist, der nach Setzen des Verankerungselementes zum Befestigen eines Teiles daran dient, so daß somit eine gegensinnig zur Einschlagrichtung gerichtete Zugkraft wirksam ist, die bestrebt ist, die Hülse aus der Bohrlochwandung herauszuziehen. Der den geschlitzten Zungen der Schlaghülse zum Aufspreizen dieser zugeordnete Spreizkörper besteht aus einem demgegenüber kurzen Axialbolzen mit endseitigem Konus, der sich entgegen der Schlagrichtung verjüngt. Am anderen Ende ist der Spreizkörper mit einem tellerförmigen Abstützkörper versehen, der weder hinsichtlich Form noch Abmessungen an die Bohrlochwandung angepaßt ist. Zwischen diesem tellerförmigen Abstützkörper und dem im Durchmesser dicksten Ende des Konus ist eine Ringnut vorgesehen, deren Nutflanken einerseits durch den Abstützkörper und andererseits durch das im Durchmesser größere Ende des Konus gebildet sind. Die Ringnut hat die Aufgabe, im fertig eingeschlagenen Zustand der Schlaghülse deren formschlüssige Verbindung mit dem Spreizkörper dadurch zu sichern, daß die im Querschnitt reduzierten und relativ weichen Enden der Zungen der Schlaghülse nach Hinweggleiten über den Konus von der Wandung der Bohrung her radial nach innen und in die Ringnut hineingebogen werden und sich dort hakenförmig verkrallen und dadurch die am querschnittsgrößten Ende des Konus gebildete Ringschulter übergreifen. Aufgrund dieses hakenförmigen Eingreifens der freien Enden der Zungen soll die Schlaghülse gegen Abziehen vom Konus und Herausziehen aus der Bohrlochwandung gesichert sein. Aus DE-A 1 400 857 ist ein zweiteiliger Spreizdübel mit Zugschraube bekannt, bei dem jeweils einander entgegengerichtete Finger zwischen einem die Zugkräfte aufnehmenden hinteren Dübelteil und einer vorderen Hülse ineinandergreifen und bei verstärkter Zugkraft sich bogenförmig nach außen ausweiten und dadurch die Spreizwirkung in der Bohrung vergrößern sollen. Der Spreizdübel bewirkt eine rein kraftschlüssige Verankerung.

Aus DE-A 2 916 737 ist ein Befestigungselement bestehend aus einem Keilbolzen und einem eigenständigen Keilstück, bekannt. Der Keilbolzen ist an einem Ende in Längsrichtung geschlitzt unter Bildung zweier abbiegbarer, etwa meißelförmiger Zungen. Das Keilstück vermag beim Aufschlagen des Keilbolzens mit dem Keilende in den Längsschlitz des Keilbolzens einzugreifen. An die Keilspitze schließt sich ein bogenförmig verbreiteter Keilteil an, auf dem beim Aufschlagen des Keilbolzens dessen meißelförmige Zungen unter Aufbiegung mit Bogenform auflaufen. Beim Aufschlagen des Keilbolzens sollen somit durch dieses Keilstück die meißelförmigen Zungen des Keilbolzens dazu gezwungen werden, in sanftem Winkel in die Wandung des Bohrloches hineinzudringen und sich dann, der Form des Keilstückes entsprechend, allmählich zur Richtung des Bohrloches zu biegen und zum Schluß sich noch etwas zurück nach innen zu biegen, wobei das Keilstück zwischen den Zungen so verschlossen wird, daß es auch bei evtl. Rütteln nicht gelöst werden kann. Wenn dieses Stadium erreicht ist, ist ein weiteres Einschlagen des Keilbolzens nicht mehr möglich, da dann die meißelförmigen Zungen von außen her gegen das Keilstück gedrückt werden würden. Auch fehlt entsprechender Platz in der Bohrlochwandung. Daher ist ausgeschlossen, daß bei Erreichen der vorgenannten Endstellung die Zungen des Keilbolzens noch über diese axiale Endstellung hinaus weiter auf das Keilstück aufgleiten können. Zugleich ergibt sich ein Stau des von den Zungen beim Aufschlagen des Keilstückes ausgeräumten und vor den Zungen hergeschobenen Wandungsmateriales.

Aus DE-U 1 864 882 ist ein zweiteiliger Spreizdübel bekannt, der aus einer Dübelhülse, die durch Längsschlitze gebildete Zungen aufweist, und aus einem zugeordneten konischen Spreizbolzen besteht, auf den die Dübelhülse aufgeschlagen werden soll. Der Spreizdübel wird beim Aufschlagen axial in der Bohrung direkt dadurch abgestützt, daß der Spreizkörper mit seinem dem Bohrlochgrund nahen Endbereich am Bohrlochgrund Abstützung erfährt. Der zwischen dem vorderen Ende der Dübelhülse und dem Spreizkörper verbleibende Ringraum ist zu klein und somit ungenügend, um beim Aufschlagen der Dübelhülse abgetragenes Wandungsmaterial aufnehmen zu können. Es gelten dafür die gleichen Nachteile wie für das Verankerungselement gemäß GB-A 2 109 886, die einleitend dargestellt sind.

Aus DK-A 69 211 ist ein Verankerungselement ersichtlich, welches einen mit Innengewinde versehenen Tragkörper und eine auf den Tragkörper passende und aufschiebbare Hülse aufweist, die an einem Ende durch Längsschlitze gebildete, verformbare Zungen aufweist. Der Tragkörper ist am zugeordneten Ende mit einem radial überstehenden Ringbund versehen, an den sich eine rotationssymmetrische Vertiefung anschließt. Wird in das Gewinde des Tragkörpers am anderen Ende ein Zugelement eingeschraubt, das axial die aufgesteckte Hülse mit dem geschlitzten Ende gegen den überstehenden Ringbund drückt, so werden die Zungen der Hülse derart verformt, daß sie sich mit ihrem Ende in die an den Ringbund anschließende Vertiefung hineinlegen und mit einem daran anschließenden Abschnitt radial nach außen auswölben, so daß die Zungen etwa S-Form erhalten. Dadurch soll eine radiale Klemmwirkung erzielt werden.

Ferner ist ein Verankerungselement (DE-A 2 554 851) bekannt, das als kraftschlüssiger Dübel ausgebildet ist. Die Hülse ist an einer Stelle axial durchgängig geschlitzt und sitzt auf einem Zylinderabsatz, der an dem dem Konus gegenüberliegenden Hülsenende in einen im Durchmesser größeren Zylinderabschnitt übergeht unter Bildung einer dortigen Schulter, wodurch die Hülse axial auf dem Zylinderabsatz zwischen dem Konus und der Schulter festgelegt ist. Die Handhabung dieses Dübels ist in üblicher Weise so, daß dieser mit auf dem Zylinderabsatz aufgebrachter Hülse in die Bohrung des Betonteiles eingesteckt wird, wobei die Hülse sich an der Bohrungswandung festsetzen soll. Sodann wird durch Zug am Bolzen in zur Einsetzrichtung gegensinniger Richtung dessen Konus, mit der im Durchmesser schmaleren Seite voran, in das Innere der relativ dazu feststehenden Hülse eingeführt, um dadurch ein Aufspreizen der Zungen der Hülse zu erreichen und damit ein Festklemmen innerhalb der Bohrung. Ersichtlich bewirkt dieses Verankerungselement lediglich eine kraftschlüssige Verankerung des Bolzens innerhalb der Bohrung. Das Verankerungselement bietet keinen dauerhaft zuverlässigen festen Sitz. So besteht die Gefahr, daß dann, wenn im Laufe der Zeit Risse im Betonteil entstehen, der Kraftschluß verloren geht, weil ein sicheres Nachspreizen der Zungen der Hülse nicht gewährleistet ist. Das Material der Hülse kann im Laufe der Zeit ermüden. Hinzu kommen auch Korrosionen im Bereich der Hülse. Schon aus diesen Gründen ist keine Gewähr für ein Nachspreizen gegeben. Aus diesem Grund bietet dieses bekannte Verankerungselement auf Dauer, auch auf Jahre hinaus, keine zuverlässige Verankerung.

Weitere vorteilhafte Ausgestaltungen des Verankerungselementes gemäß der Erfindung ergeben sich aus den Ansprüchen 2–26.

Ausführungsbeispiele der Erfindung sind in den Zeichnungen dargestellt und in der nachfolgenden Beschreibung näher erläutert. Es zeigen:

Fig. 1 eine schematische Seitenansicht eines Bolzens eines Verankerungselements, gemäß einem ersten Ausführungsbeispiel,

Fig. 2 einen schematischen axialen Längsschnitt einer dem Bolzen in Fig. 1 zugeordneten Hülse des Verankerungselements,

Fig. 3 eine Seitenansicht der Hülse in Fig. 2,

Fig. 4 und 5 jeweils einen schematischen Schnitt des kompletten Verankerungselements gemäß dem ersten Ausführungsbeispiel, und zwar in einem Zwischenstadium bei der Montage bzw. im Endstadium,

Fig. 6 einen schematischen axialen Längsschnitt etwa entsprechend Fig. 2 einer Hülse gemäß einem zweiten Ausführungsbeispiel,

Fig. 7 eine Seitenansicht der Hülse in Fig. 6,

Fig. 8 und 9 jeweils eine schematische Seitenansicht eines Bolzens gemäß einem dritten bzw. vierten Ausführungsbeispiel,

Fig. 10 und 11 jeweils einen schematischen Schnitt eines kompletten Verankerungselements gemäß einem fünften Ausführungsbeispiel, und zwar in einem Zwischenstadium bei der Montage bzw. im Endstadium.

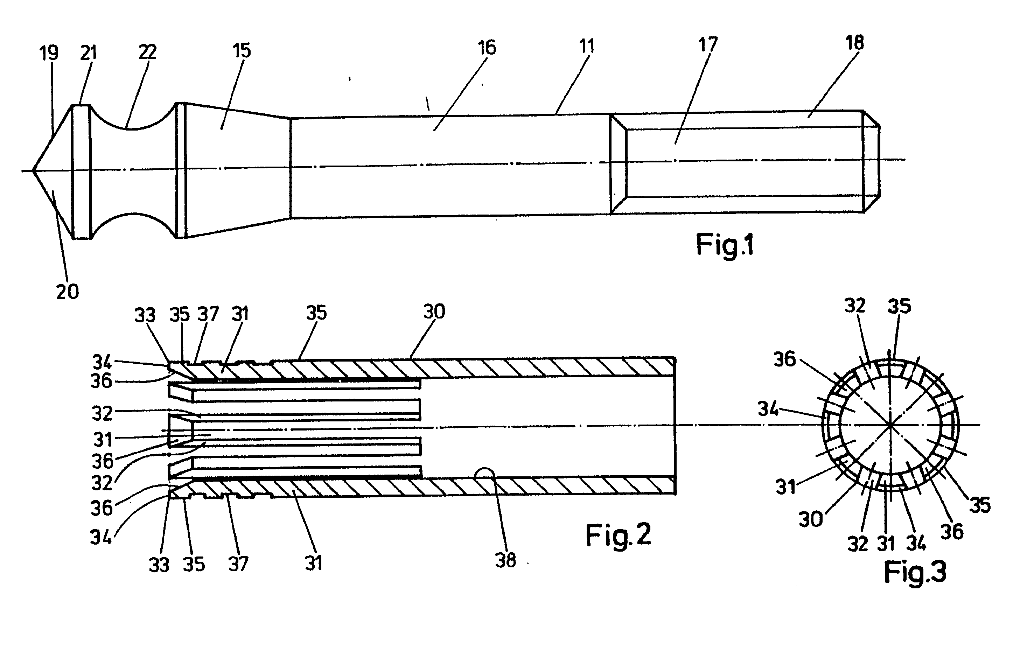

Beim ersten Ausführungsbeispiel in Fig. 1–5 ist ein Verankerungselement 10 gezeigt, das aus einem Bolzen 11 und einer dem Bolzen 11 zugeordneten und an dessen Abmessungen angepaßten Schlaghülse 30 besteht, die nachfolgend kurz als Hülse bezeichnet ist. Dieses Verankerungselement 10 ist z.B. so bemessen, daß es zum Einsetzen in eine in einem Betonteil 12 befindliche Bohrung 13 geeignet ist, die einen Durchmesser z.B. von 16 mm und eine Bohrlochtiefe z.B. von 75 mm hat. Die Bohrung 13 ist z.B. mit einem handelsüblichen 16 mm-Hartmetallbohrer und unter Verwendung z.B. eines Bohrhammers hergestellt worden, wobei die genaue Einhaltung der Bohrlochtiefe durch einen am Hartmetallbohrer befindlichen Bund sichergestellt ist, der bei Erreichen der Solltiefe an der Vorderfläche 14 des Betonteiles 12 anschlägt.

Der Bolzen 11 trägt an seinem in die Bohrung 13 einsetzbaren Abschnitt, in Fig. 1, 4 und 5 im Bereich des dort linken Endes, einen damit einstückigen Konus 15, der sich in zur Einsetzrichtung gegensinniger Richtung verjüngt. Der Schrägungswinkel des Konus beträgt einseitig zwischen etwa 5° und 15°, wobei der jeweilige Schrägungswinkel von den Abmessungen des Verankerungselements 10 und dabei auch der Verformbarkeit der Hülse 30 abhängt. Bei größeren Dübelabmessungen, z.B. von 30 mm Durchmesser, liegt der Schrägungswinkel des Konus 15 im unteren Bereich, z.B. zwischen 5° bis 12°, während er bei kleineren Dübelabmessungen im oberen Bereich liegt, z.B. zwischen 8° und 15° beträgt. In zur Einsetzrichtung gegensinniger Richtung schließt sich an den Konus 15 ein zylindrischer Endabsatz 16 an, der am in Fig. 1 rechten Ende einen Befestigungsabschnitt 17 aufweist, der mit einem Außengewinde 18 versehen ist. Der Endabsatz 16 oder Befestigungsabschnitt 17 kann an geeigneter Stelle mit einer nicht gezeigten Sichtmarke versehen sein, die die Soll-Einsetztiefe des Bolzens 11 beim Einsetzen in die Bohrung 13 anzeigt.

Am in Fig. 1, 4 und 5 linken, d.h. in Einsetzrichtung vorderen, Ende weist der Bolzen 11 einen Abstützkörper 20 mit kegelförmiger Abstützfläche 19 auf, deren Spitzenwinkel demjenigen zumindest im wesentlichen, vorzugsweise möglichst genau, entspricht, den der zur Herstellung der Bohrung 13 verwendete Bohrer hat. Der Spitzenwinkel der Abstützfläche 19 beträgt z.B. 120° oder 130°. Durch die Abstimmung des Spitzenwinkels dieses Kegels auf denjenigen des verwendeten Bohrers ist sichergestellt, daß der Bolzen 11 mit der Abstützfläche 19 im Grund der Bohrung 13 großflächig abgestützt ist und so eine optimale Auflagefläche gewährleistet ist. Diese großflächige Axialabstützung des Bolzens 11 am Grund der Bohrung 13 stellt sicher, daß der in die Bohrung 13 eingesetzte Bolzen 11 auch unter Einwirkung von Schlägen nicht ausweicht und nicht tiefer in das Betonteil 12 eindringt und dieses auch im Bereich des Grundes der Bohrung 13 nicht beschädigt oder zerstört.

Der Bolzen 11 weist zwischen dem Konus 15 und dem Abstützkörper 20 mit Abstützfläche 19 einen zylindrischen Kopfteil 21 auf, dessen Außendurchmesser dem Durchmesser des Konus 15 an dessen dickster Stelle höchstens entspricht oder zumindest im der dicksten Stelle des Konus 15 benachbarten Axialbereich auch ein wenig kleiner sein kann. Insgesamt ist das vordere, in Fig. 1, 4 und 5 links befindliche Ende des Bolzens 11 mitsamt dem Konus 15 hinsichtlich des Außendurchmessers nicht größer als der Durchmesser der Bohrung 13. Sieht man von den beim Bohren in Beton üblichen Toleranzen ab, entsprechen sich die Durchmesser.

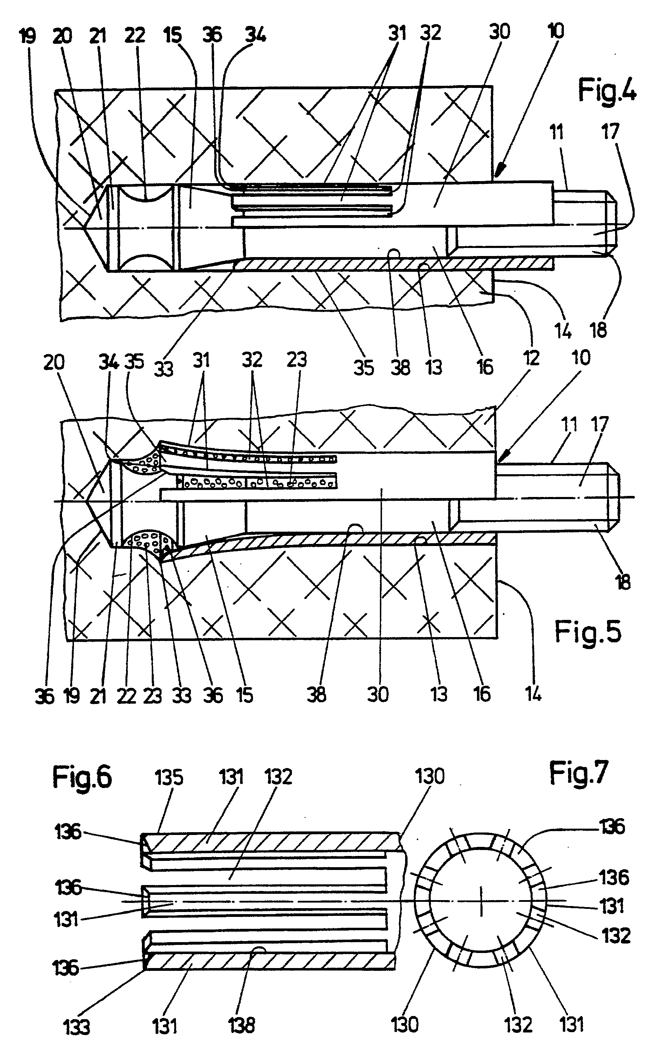

Der zylindrische Kopfteil 21 weist eine rotationssymmetrische Eintiefung 22 auf, die im Querschnitt etwa bogenförmig gestaltet ist. Die Eintiefung 22 ist als Spanraum ausgebildet, die beim Einbringen des Verankerungselements 10 in das Betonteil 12 das dabei ausgeräumte Material 23 der Bohrung 13 aufnehmen kann, wie Fig. 5 zeigt. Ferner dient der Kopfteil 21 dem Toleranzausgleich beim Einschlagen der Hülse 30. Der an die dickste Stelle des Konus 15 anschließende Bereich des zylindrischen Kopfteils 21 kann dort im Durchmesser etwas kleiner sein als der Außendurchmesser des axial in Abstand befindlichen restlichen zylindrischen Teiles, wodurch ein in die Eintiefung 22 axial übergehender Übergangsbereich geschaffen ist, der beim Einbringen des Dübels ausgeräumtes Material 23 axial in den Bereich der Eintiefung 22 leiten kann.

Die Hülse 30 weist axiale, ausfederbare Zungen 31 und zwischen den Zungen 31 gebildete Schlitze 32 auf. Sie wird bei der Montage in Einsetzrichtung auf den Bolzen 11 aufgeschoben. Dabei sind die Zungen 31 beim Auftreffen auf die Schrägfläche des Konus 15 infolge axialer Relativbewegung zwischen Bolzen 11 und Hülse 30 nach außen aufbiegbar mit Vergrößerung des Außendurchmessers im Bereich der Zungen 31.

Relativ zum in die Bohrung 13 eingesetzten und dort im Bohrungsgrund mittels der kegelförmigen Abstützfläche 19 abgestützten und unverschieblichen Bolzen 11 kann die Hülse 30 bei Einwirkung axialer Schlagkräfte darauf mit den Zungen 31 auf den Konus 15 aufgleiten und dabei zugleich mit Flächen am freien Ende der Zungen 31 das Material 23 der Wandung der Bohrung 13 ausräumen. Jede einzelne Zunge 31 greift mit ihrem freien Ende, und zwar der dort befindlichen Brustfläche, bedingt durch das Aufgleiten auf den Konus 15 zunehmend stärker in das Wandungsmaterial des Betonteiles 12 ein, wobei jede Zunge 31 eine durch die Zungenbreite bestimmte Nut im Betonteil 12 formt. Auf diese Weise wird durch Schlagen des Verankerungselements 10, und zwar der Hülse 30, ein Hinterschnitt hergestellt, der eine echte formschlüssige Verankerung gewährleistet.

Die einzelnen Zungen 31 sind an ihrem in Fig. 1, 4 und 5 links befindlichen freien Ende jeweils als Flachmeißel ausgebildet. Sie tragen an diesem Ende jeweils eine äußere Schneidkante 33. Diese wird gebildet zwischen einer radial gebildeten Vorderfläche 34 und der äußeren Umfangsfläche 35. An diesem Ende weisen die Zungen 31 jeweils brustseitig eine radial von innen nach außen und dabei nach vorn gerichtete Schrägfläche 36 auf, die in die Vorderfläche 34 übergeht. Die Schrägfläche 36 verläuft gegenüber der Ebene der radialen Vorderfläche 34 unter einem spitzen Winkel, der z.B. etwa zwischen 5° und 60° liegen kann. Der Winkel wird u.a. von der Größe des Verankerungselements 10 und der Festigkeit der Hülse 30 sowie unter Umständen auch vom Material bestimmt, in das das Verankerungselement 10 eingebracht werden soll.

Bei einem anderen, nicht gezeigten Ausführungsbeispiel entfällt die Schrägfläche 36. Statt dessen reicht die radiale Vorderfläche 34 von der äußeren Schneidkante 33 radial nach innen bis zur inneren Umfangsfläche. Die Brustfläche ist dann wie am in Fig. 2 rechten Ende der Hülse 30 als plane Stirnfläche gestaltet.

Wie lediglich in Fig. 2 angedeutet ist, können die einzelnen Zungen 31 zumindest auf ihrem vorderen Axialbereich auf der äußeren Umfangsfläche 35 eine oder mehrere Ringnuten 37 aufweisen. Diese können hinsichtlich der Nuttiefe je nach Dübelgröße variieren. Sie sind z.B. etwa 0,2 bis 1 mm tief und etwa 1 mm bis 4 mm breit. Sie verhindern, daß sich die Hülse 30 im Beton festfrißt, wenn sie über den Konus 15 nach vorn geschlagen wird. Dabei bewirken die scharfkantigen Ringnuten 37 ein Freischneiden. Außerdem bilden die Ringnuten 37 zusätzliche Spanräume, die Gesteinsmehl aufnehmen können.

Die Zungen 31 und Schlitze 32 dazwischen sind durch Aufsägen des betreffenden Teiles der Hülse 30 gewonnen, die als ansonsten ringförmig geschlossene Zylinderhülse mit über ihre Länge gleichbleibendem Querschnitt ausgebildet ist. Die axiale Länge der Zungen 31 ist jeweils wesentlich größer als diejenige des Konus 15 bemessen. Die Länge der Zungen 31 beträgt z.B. etwa das Doppelte derjenigen des Konus 15. Dadurch ist sichergestellt, daß im völlig eingeschlagenen Zustand der Hülse 30 gemäß Fig. 5 die mittels des Konus 15 nach außen gezwungenen Zungen 31 in dem Axialbereich verformt sind, der sich noch in relativ großem Abstand vom Fuß der Zungen 31 befindet. Es ist also vermieden, daß die Zungen 31 in ihrem Fußbereich auf Biegung beansprucht sind. Die einzelnen Zungen 31 können somit leicht ohne Aufweitung der geschlossenen Hülse 30 dem Winkel des Konus 15 folgen.

Die einzelnen Schlitze 32 der Hülse 30 sind als zusätzliche Spanräume ausgebildet, die das beim Ausräumen mittels der Zungen 31 entstehende Material 23 zusätzlich aufnehmen können, wie Fig. 5 zeigt. Beim Ausräumen und Bewegen der Zungen 31 längs des Konus 15 radial nach außen vergrößert sich die Breite der Schlitze 32, womit deren Aufnahmevermögen für das ausgeräumte Material zunimmt.

Die Schlitze 32 sind zweckmäßigerweise schmaler als die Zungen 31 bemessen. Z.B. beträgt das Maß der Schlitzbreite etwa das 0,5 bis 1-fache der Zungenbreite. Es versteht sich gleichwohl, daß bei einem anderen, nicht gezeigten Ausführungsbeispiel die Breite der Schlitze 32 auch größer als diejenige der Zungen 31 sein kann.

Die Anzahl der Zungen 31 liegt je Hülse 30 etwa zwischen vier und zwölf Zungen 31, was von den jeweiligen Abmessungen des Verankerungselements 12 abhängt. Bei großem Durchmesser der Hülse 30, z.B. von 30 mm, hat diese bis zu zwölf Zungen 31, bei mittlerem Durchmesser dagegen etwa sechs bis acht Zungen 31 und bei kleinem Durchmesser etwa vier bis sechs Zungen 31.

Der Außendurchmesser der Hülse 30 ist zumindest im wesentlichen so groß wie der Durchmesser der Bohrung 13. Unter Berücksichtigung der beim Bohren in Beton üblichen Toleranzen kann der Außendurchmesser der Hülse 30 auch geringfügig kleiner sein. Der Innendurchmesser der Hülse 30 ist zumindest im wesentlichen so groß wie der Außendurchmesser des zylindrischen Endabsatzes des Bolzens 11 und insbesondere wie der Außendurchmesser des Konus 15 an dessen dünnster Stelle. Dabei beträgt die Dicke der Zylinderwandung der Hülse 30 etwa 1,5 bis 3 mm, was vom jeweiligen Durchmesser des Bolzens 11 und den Gesamtabmessungen des Verankerungselementes 10 abhängt. Bei kleinen Dübelabmessungen beträgt die Wandstärke z.B. etwa 1,5 bis 2 mm, bei mittleren Abmessungen etwa 2 mm und bei größeren Abmessungen etwa 2 bis 3 mm. Die innere Umfangsfläche 38 der Hülse 30 ist durchgehend glatt.

Die Gesamtlänge der Hülse 30 ist beim ersten Ausführungsbeispiel deutlich kleiner als diejenige des Bolzens 11. Bei eingeschlagener Hülse 30 (Fig. 5) steht somit der Bolzen 11 mit dem das Außengewinde 18 tragenden Befestigungsabschnitt 17 über das Ende der Hülse 30 auch in deren eingeschlagenem Zustand (Fig. 5) soweit über, daß darauf die Anbringung eines zu befestigenden Teiles und Befestigung mittels auf den Befestigungsabschnitt 17 aufzuschraubender Mutter erfolgen kann. Der eingeschlagene Zustand der Hülse 30 ist dann, nach außen sichtbar, erreicht, wenn deren rechtes Ende bündig mit der Vorderfläche 14 abschließt. Es versteht sich aber, daß bei anderen Ausführungsbeispielen oder Situationen die Hülse 30 erforderlichenfalls auch noch weiter eingeschlagen werden kann.

Um das Verankerungselement 10 in das Betonteil 12 einzubringen, geht man wie folgt vor. Zunächst wird mittels eines handelsüblichen Hartmetallbohrers und vorzugsweise unter Benutzung eines leistungsfähigen Bohrhammers die Bohrung 13 vorgegebenen Durchmessers und vorgegebener Tiefe in das Betonteil 12 gebohrt, wie eingangs erläutert. Hiernach wird der Bolzen 11 – zunächst ohne Hülse 30 oder auch mitsamt dieser – mit dem Abstützkörper 20 voran in die Bohrung 13 eingesetzt, bis er mit der kegelförmigen Abstützfläche 19 an dem kegelförmigen Bohrlochgrund gleichen Spitzenwinkels anschlägt und aufsitzt. Sodann wird die Hülse 30 mit den Zungen 31 voran soweit aufgeschoben, bis die Zungen 31 mit ihren freien Enden am Konus 15 aufsitzen. Sodann wird die Hülse 30 durch axiale Schläge eingetrieben. Hierzu wird auf das überstehende Ende des Befestigungsabschnittes 17 ein hülsenförmiges Werkzeug aufgesetzt, das an dem in Fig. 4 rechten Stirnende der Hülse 30 anschlägt. Das hülsenförmige Werkzeug wird dann schlagend beaufschlagt, z.B. unter Verwendung des gleichen Bohrhammers, mit dem zuvor die Bohrung 13 hergestellt wurde. Das Werkzeug wird dazu entweder in das Futter des Bohrhammers eingespannt oder z.B. auf den darin verbliebenen Hartmetallbohrer aufgesteckt, an dessen Bund es axial anschlägt. Aufgrund der auf die Hülse 30 wirkenden Axialschläge dringen die Zungen 31 mit ihren freien Enden, die als Flachmeißel ausgebildet sind, in das Material des Betonteiles 12 ein. Zugleich gleiten die Zungen 31 mit ihren freien Enden auf dem Konus 15 entlang, durch den die Zungen 31 zunehmend weiter radial nach außen weggedrückt werden. Die Zungen 31 räumen hierbei mit ihrer vorn befindlichen Brustfläche, insbesondere mit der inneren Schrägfläche 36 und radialen Vorderfläche 34 sowie äußeren Schneidkante 33, das Wandungsmaterial rings um die Bohrung wie ein Räumwerkzeug aus, wobei sich die Zungen 31 unter Bildung entsprechend breiter Nuten zunehmend tiefer in das Material des Betonteiles 12 hineinarbeiten. Dabei bildet sich ein Hinterschnitt von einseitig mindestens etwa 1,0 mm bis 3 mm. Das dabei ausgeräumte und weggeschlagene Material 23 wird in den Schlitzen 32 der Hülse 30 und schließlich in der rotationssymmetrischen Eintiefung 22, die sich axial an den Konus 15 anschließt, aufgenommen, die Spanräume für das Material 23 bilden.

Auf diese Weise erfolgt eine formschlüssige Verankerung des Verankerungselements 10 im Betonteil 12. Durch den selbstgeschlagenen Hinterschnitt ist das Verankerungselement 10 hoch belastbar. Die Belastbarkeit reicht – auch wenn vorher schon Risse im Betonteil 12 entstehen – bis hin zum Bruch des Betonteils selbst. Dies rührt daher, daß nur im Bereich der Zungen 31 das Wandungsmaterial des Betonteils 12 ausgeräumt wird, nicht hingegen an anderen Stellen. Dadurch verringert sich die Belastung des Betons, in den das Verankerungselement 10 eingesetzt ist. Zugleich hat dies den Vorteil, daß derartige Verankerungselemente 10 auch noch in solche Betonteile 12 eingebracht werden können, die sehr schmal sind und wenig Fleisch um die Bohrung 13 herum aufweisen, z.B. in Treppenwangen, Platten od.dgl., ohne daß dabei die Gefahr besteht, daß das Material seitlich ausbricht. Das Verankerungselement 10 zeichnet sich auch dadurch aus, daß es nur wenig Einzelteile aufweist, nämlich lediglich den Bolzen 11 und die Hülse 30, und sehr einfach und kostengünstig ist und dabei schnell und einfach gesetzt und montiert werden kann. Man benötigt dazu lediglich einen zum Verankerungselement 10 hinsichtlich Durchmesser und Länge passenden Hartmetallbohrer, einen Bohrhammer und ein hülsenförmiges Werkzeug zum Einschlagen der Hülse 30. Die Handhabung ist denkbar einfach. Dabei erfüllt das Verankerungselement 10 sämtliche Anforderungen an ein Hinterschnittsystem völlig. Von Vorteil ist im übrigen, daß die Eingriffstiefe des Verankerungselementes 10 immer gleichbleibend eingehalten werden kann.

Beim zweiten Ausführungsbeispiel in Fig. 6 und 7 reicht die am freien Ende jeder Zunge 131 der Hülse 130 vorgesehene Schrägfläche 136 von der inneren Umfangsfläche 138 bis zur äußeren Umfangsfläche 135, wo die Schrägfläche 136 in die Schneidkante 133 übergeht. Es fehlt also die beim ersten Ausführungsbeispiel zusätzlich vorhandene radial gerichtete Vorderfläche.

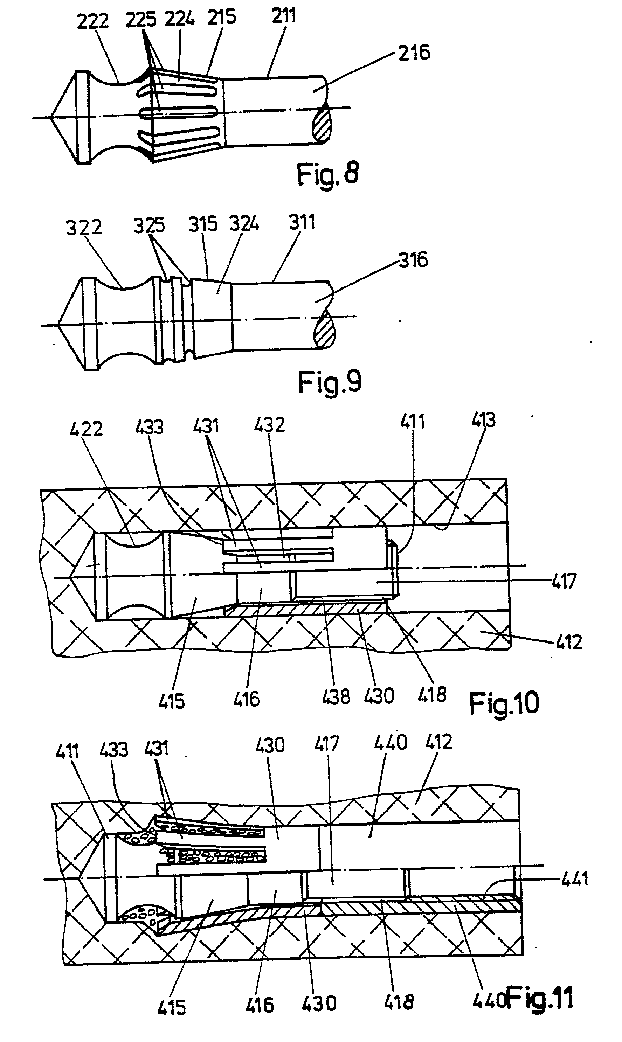

Beim dritten Ausführungsbeispiel in Fig. 8 ist der Konus 215 des Bolzens 211 auf seiner äußeren Umfangsfläche 224 mit Vertiefungen 225 versehen, die zusätzliche das ausgeräumte Wandungsmaterial der Bohrung aufnehmende Spanräume bilden. Die Vertiefungen 225 sind hier als Längsschlitze ausgebildet, die sich entlang einzelner Kegelmantellinien des Konus 215 erstrecken und bis in die rotationssymmetrische Eintiefung 222 geführt sind. Dadurch sind die Längsschlitze 225 in der Lage, beim Ausräumen durch die Zungen der Hülse nicht nur das Ausräummaterial aufzunehmen, sondern axial bis hin zur Eintiefung 222 weiterzuleiten.

Beim vierten Ausführungsbeispiel in Fig. 9 weist der Konus 315 des Bolzens 311 ebenfalls Vertiefungen 325 auf, die zusätzliche Spanräume bilden, wobei diese Vertiefungen 325 hier als Umfangsnuten in der äußeren Umfangsfläche 324 ausgebildet sind. Derartige Umfangsnuten sind zumindest auf dem Axialbereich des Konus 315 vorgesehen, der der daran anschließenden rotationssymmetrischen Eintiefung 322 nahe benachbart ist. Beim Beginn des Ausräumvorganges fällt nämlich noch relativ wenig Ausräummaterial an, dessen Menge erst mit zunehmendem Aufgleiten der Zungen auf dem Konus 315 zunimmt und in größerer Menge anzuführen ist, wenn die Zungen z.B. etwa über die axiale Mitte des Konus 315 hinausgelangt sind. Aufgrund der axialen Nähe der Vertiefungen 325 zur Eintiefung 322 kann dabei das Ausräummaterial auch leichter in die Eintiefung 322 geschoben und gedrängt werden.

Das Verankerungselement gemäß dem fünften Ausführungsbeispiel in Fig. 10 und 11 ist so ausgebildet, daß darin ein mit Außengewinde versehener Bolzen eingeschraubt werden kann. Die axiale Länge des Bolzens 411 ist hierbei kleiner als bei den vorangegangenen Ausführungsbeispielen. Dies ist durch einen wesentlich kürzeren zylindrischen Endabsatz 416 und kürzeren Befestigungsabschnitt 417, versehen mit Außengewinde 418, erreicht. Das Verankerungselement weist als zusätzliches Teil eine separate Verlängerungshülse 440 auf, die an das in Fig. 10 und 11 rechte Stirnende der Hülse 430 anschließend auf dem Befestigungsabschnitt 417 aufbringbar ist. Die Verlängerungshülse 440 ist mit einem axial vorzugsweise durchgehenden Innengewinde 441 versehen, das dem Außengewinde 418 entspricht. Die Gesamtlänge der Hülse 430 und der axial daran anschließenden Verlängerungshülse 414 ist dabei gleich oder meistens größer als diejenige des Bolzens 411. Im vollends eingeschlagenen Zustand der Hülse 430 steht somit die Verlängerungshülse 440 mit einem Axialabschnitt über den Befestigungsabschnitt 417 des Endabschnittes 416 am Bolzen 411 über, und zwar mit derart ausreichender Gewindelänge, daß darin ein Bolzen zum Befestigen irgendeines Teiles am Betonteil 412 mit ausreichender Eingrifftiefe eingeschraubt werden kann.

Nicht weiter gezeigt ist, daß zwischen der Verlängerungshülse 440 einerseits und entweder der Hülse 430 oder dem Befestigungsabschnitt 417 andererseits miteinander formschlüssig zusammenwirkende Verdrehsicherungselemente vorhanden sein können, die bei gänzlich aufgeschraubter Verlängerungshülse 440 in Eingriff kommen und diese gegen Herausdrehen blockieren.

Bei allen Ausführungsbeispielen kann es zusätzlich von Vorteil sein, wenn der Konus 15, 115, 215 z.B. an seiner dicksten Stelle im Querschnitt etwa sternförmig ausgebildet ist, wodurch Verdrehsicherungsflächen geschaffen sind, die mit den Zungen 31 formschlüssig zusammenwirken. Zusätzlich dazu oder statt dessen können als Verdrehsicherungsflächen auch die Längsnuten 225 im Konus 215 (Fig. 8) dienen oder zusätzliche Längsvertiefungen und/oder -erhöhungen vorgesehen sein, die mit den Zungen formschlüssig zur Verdrehsicherung zusammenwirken.

Bei einem anderen, nicht gezeigten Ausführungsbeispiel sind die Verdrehsicherungsflächen an anderer Stelle des Bolzens 11, 211, 311 oder auch zusätzliche Flächen an der zugeordneten Hülse 30 vorgesehen.

**Patentansprüche**

1. Verankerungselement mit einem Bolzen (11), der an seinem in eine Bohrung (13) einsetzbaren Abschnitt am Ende einen Abstützkörper (20) zur axialen Abstützung am Bohrlochgrund und einen Konus (15) aufweist, der sich in zur Einsetzrichtung gegensinniger Richtung verjüngt, und mit einer axiale Zungen (31) und dazwischen gebildete Schlitze (32) aufweisenden Schlaghülse (30) auf dem Bolzen (11), deren Zungen (31) beim Auftreffen auf den Konus (15) infolge axialer Relativbewegung zwischen Bolzen (11) und Schlaghülse (30) nach außen biegbar sind und mit ihrem freien Ende das Wandungsmaterial der Bohrung (13) ausräumen, wobei zwischen dem Konus (15) und dem Abstützkörper ein ausgeräumtes Wandungsmaterial (23) der Bohrung (13) aufnehmender Spanraum vorgesehen ist, dadurch gekennzeichnet, daß der Abschnitt des Bolzens (11) zwischen dem Abstützkörper (20) und dem Konus (15) einen etwa zylindrischen Kopfteil (21) aufweist, der eine rotationssymmetrische Eintiefung (22; 222; 322; 422) enthält, welche den Spanraum bildet.

2. Verankerungselement nach Anspruch 1, dadurch gekennzeichnet, daß der Außendurchmesser des Konus (15) an dessen dickster Stelle dem Außendurchmesser des Kopfteiles (21) entspricht.

3. Verankerungselement nach Anspruch 1 oder 2, dadurch gekennzeichnet, daß der Außendurchmesser des Konus (15; 215; 315; 415) im Übergangsbereich zum Kopfteil (21) und dessen Eintiefung (22; 222; 322; 422) zumindest geringfügig kleiner als der benachbarte Außendurchmesser des Kopfteiles (21) bemessen ist unter Bildung eines axial in die Eintiefung (22; 222; 322; 422) übergehenden, das ausgeräumte Material (23) in diese leitenden Übergangsbereiches.

4. Verankerungselement nach einem der Ansprüche 1–3, dadurch gekennzeichnet, daß die Zungen (31; 131; 431) an ihrem freien Ende jeweils als Flachmeißel ausgebildet sind.

5. Verankerungselement nach einem der Ansprüche 1–4, wobei die Zungen an ihrem freien Ende brustseitig jeweils eine radial von innen nach außen und dabei nach vorn gerichtete Schrägfläche aufweisen, dadurch gekennzeichnet, daß die Schrägfläche (36) in eine radial gerichtete Vorderfläche (34) übergeht.

6. Verankerungselement nach einem der Ansprüche 1–4, dadurch gekennzeichnet, daß die Zungen an ihrem freien Ende jeweils brustseitig ausschließlich eine radial verlaufende Brustfläche aufweisen.

7. Verankerungselement nach einem der Ansprüche 1–6, dadurch gekennzeichnet, daß die Zungen (31) zumindest auf ihrem vorderen Axialbereich auf der äußeren Umfangsfläche (35) mindestens eine Ringnut (37) aufweisen.

8. Verankerungselement nach einem der Ansprüche 1–7, dadurch gekennzeichnet, daß die zwischen den Zungen (31; 131; 431 ) gebildeten Schlitze (32; 132; 432) als das ausgeräumte Wandungsmaterial aufnehmende Spanräume ausgebildet sind.

9. Verankerungselement nach einem der Ansprüche 1–8, dadurch gekennzeichnet, daß die zwischen den Zungen (31; 131; 431) gebildeten Schlitze (32; 132; 432) schmaler als die Zungen bemessen sind, vorzugsweise etwa das 0,5 bis 1-fache der Zungenbreite breit sind.

10. Verankerungselement nach einem der Ansprüche 1–9, dadurch gekennzeichnet, daß die Schlaghülse (30; 130; 430) etwa zwischen vier und zwölf Zungen (31; 131; 431) aufweist.

11. Verankerungselement nach einem der Ansprüche 1–10, dadurch gekennzeichnet, daß die axiale Länge der Zungen (31; 131; 431) jeweils wesentlich größer als diejenige des Konus (15; 215; 315; 415) am Bolzen (11; 211; 311; 411) bemessen ist.

12. Verankerungselement nach Anspruch 11, dadurch gekennzeichnet, daß die axiale Länge der Zungen (31; 131; 431) etwa das Doppelte derjenigen des Konus (15; 215; 315; 415) am Bolzen (11; 211; 311; 411) beträgt.

13. Verankerungselement nach einem der Ansprüche 1–12, wobei die Schlaghülse als ringförmig geschlossene Zylinderhülse ausgebildet ist, dadurch gekennzeichnet, daß die Schlaghülse (30; 130; 430) einen über ihre Länge gleichbleibenden Querschnitt aufweist.

14. Verankerungselement nach einem der Ansprüche 1–13, dadurch gekennzeichnet, daß der Au-

Bendurchmesser der Schlaghülse (30, 130; 430) im wesentlichen so groß wie der Durchmesser der jeweiligen Bohrung (13; 413) oder nur geringfügig kleiner als dieser ist.

15. Verankerungselement nach einem der Ansprüche 1–14, dadurch gekennzeichnet, daß der Innendurchmesser der Schlaghülse (30; 130, 430) im wesentlichen so groß wie der Außendurchmesser des Konus (15; 215; 315; 415) an dessen dünnster Stelle oder nur geringfügig größer als dieser ist.

16. Verankerungselement nach einem der Ansprüche 1–16, dadurch gekennzeichnet, daß die Dicke der Zylinderwandung der Schlaghülse (30; 130; 430) etwa zwischen 1,5 mm bis 3 mm beträgt.

17. Verankerungselement nach einem der Ansprüche 1–15, gekennzeichnet durch eine Verlängerungshülse (440), die mit einem axial vorzugsweise durchgehenden Innengewinde (441) versehen ist und an das Ende der Schlaghülse (430) anschließend auf den über das Ende der Schlaghülse (430) überstehenden Endabsatz (417) des Bolzens (411) aufbringbar ist.

18. Verankerungselement nach einem der Ansprüche 1–17, dadurch gekennzeichnet, daß die Abstützfläche (19) des Abstützkörpers (20) kegelförmig ausgebildet ist.

19. Verankerungselement nach Anspruch 18, dadurch gekennzeichnet, daß der Spitzenwinkel der Abstützfläche (19) demjenigen eines Bohrers, der zur Herstellung der Bohrung (13) verwendet wird, zumindest im wesentlichen entspricht.

20. Verankerungselement nach Anspruch 18 oder 19, dadurch gekennzeichnet, daß der Spitzenwinkel zwischen 120° und 130° Gesamtwinkel beträgt.

21. Verankerungselement nach einem der Ansprüche 1–20, dadurch gekennzeichnet, daß das vordere Ende des Bolzens (11) mitsamt dem Konus (15) hinsichtlich des Außendurchmessers ebenso groß wie der Durchmesser der zur Dübelgröße gehörenden Bohrung (13) bemessen ist.

22. Verankerungselement nach einem der Ansprüche 1–21, dadurch gekennzeichnet, daß der Schrägungswinkel des Konus (155; 215; 315; 415) am Bolzen (11; 211; 311; 411) etwa zwischen 5° und 15° einseitig beträgt.

23. Verankerungselement nach einem der Ansprüche 1–22, dadurch gekennzeichnet, daß der Konus (215; 315) auf seiner äußeren Umfangsfläche (224; 324) Vertiefungen (225; 325) aufweist, die zusätzliche, das ausgeräumte Wandungsmaterial der Bohrung aufnehmende Spanräume bilden.

24. Verankerungselement nach Anspruch 23, dadurch gekennzeichnet, daß die Vertiefungen (225) als Längsschlitze ausgebildet sind, die sich entlang einzelner Kegelmantellinien des Konus (215) erstrecken und bis in die rotationssymmetrische Eintiefung (222) geführt sind.

25. Verankerungselement nach Anspruch 23, dadurch gekennzeichnet, daß die Vertiefungen (325) als Umfangsnuten ausgebildet sind, die zumindest auf dem Axialbereich des Konus (315) vorgesehen sind, der der daran anschließenden rotationssymmetrischen Eintiefung (322) nahe benachbart ist.

26. Verankerungselement nach einem der Ansprüche 1–25, dadurch gekennzeichnet, daß der Konus (15; 115; 215), zumindest an seiner dicksten Stelle, im Querschnitt etwa sternförmig ausgebildet ist oder Längsvertiefungen und/oder -erhöhungen aufweist.

**Claims**

1. Anchoring element comprising a bolt (11) which has a section which can be inserted into a bore (13), has at the end a supporting body (20) for the axial support on the drilled-hole bottom and a taper (15) which narrows in the opposite direction to the insertion direction, and a striking sleeve (30), having axial tongues (31) and slots (32) formed in between, on the bolt (11), the tongues (31) of which striking sleeve (30), upon striking the taper (15), can be bent outward as a result of axial relative movement between bolt (11) and striking sleeve (30) and, with their free end, clear the wall material of the bore (13), a chip space which receives cleared wall material (23) of the bore (13) being provided between the taper (15) and the supporting body, characterized in that the section of the bolt (11) between the supporting body (20) and the taper (15) has a roughly cylindrical head part (21) which contains a rotationally symmetric cupped portion (22; 222; 322; 422) which forms the chip space.

2. Anchoring element according to claim 1, characterized in that the outside diameter of the taper (15), at its thickest point, corresponds to the outside diameter of the head part (21).

3. Anchoring element according to claim 1 or 2, characterized in that the outside diameter of the taper (15; 215; 315; 415) in the transition region to the head part (21) and its cupped portion (22; 222; 322; 422) is dimensioned to be at least slightly smaller than the adjacent outside diameter of the head part (21) while forming a transition region which merges axially into the cupped portion (22; 222; 322; 422) and directs the cleared material (23) into the latter.

4. Anchoring element according to one of claims 1–3, characterized in that the tongues (31; 131; 431) are each designed as a flat chisel at their free end.

5. Anchoring element according to one of claims 1–4, the tongues, at their free end, in each case having at the rake side a sloping face directed radially from inside to outside and in effect to the front, characterized in that the sloping face (36) merges into a radially directed front face (34).

6. Anchoring element according to one of claims 1–4, characterized in that the tongues, at their free end, in each case at the rake side, have solely a radially running rake face.

7. Anchoring element according to one of claims 1–6, characterized in that the tongues (31), at least on their front axial region, have at least one anular groove (37) on the outer peripheral surface (35).

8. Anchoring element according to one of claims 1–7, characterized in that the slots (32; 132; 432) formed between the tongues (31; 131; 431) are designed as chip spaces receiving the cleared wall material.

9. Anchoring element according to one of claims 1–8, characterized in that the slots (32; 132; 432) formed between the tongues (31; 131; 431) are dimensioned to be narrower than the tongues, preferably about 0.5 to 1 times the width of the tongues.

10. Anchoring element according to one of claims 1–9, characterized in that the striking sleeve (30; 130; 430) has between about four and twelve tongues (31; 131; 431).

11. Anchoring element according to one of claims 1–10, characterized in that the axial length of the tongues (31; 131; 431) is in each case dimensioned to be substantially larger than that of the taper (15; 215; 315; 415) on the bolt (11; 211; 311; 411).

12. Anchoring element according to claim 11, characterized in that the axial length of the tongues (31; 131; 431) is about twice that of the taper (15; 215; 315; 415) on the bolt (11; 211; 311; 411).

13. Anchoring element according to one of claims 1–12, the striking sleeve being designed as a cylindrical sleeve closed in an annular shape, characterized in that the striking sleeve (30; 130; 430) has a cross-section uniform over its length.

14. Anchoring element according to one of claims 1–13, characterized in that the outside diameter of the striking sleeve (30; 130; 430) is essentially as large as the diameter of the respective bore (13; 413) or only slightly smaller than the latter.

15. Anchoring element according to one of claims 1–14, characterized in that the inside diameter of the striking sleeve (30; 130; 430) is essentially as large as the outside diameter of the taper (15; 215; 315; 415) at its thinnest point or only slightly larger than the latter.

16. Anchoring element according to one of claims 1–14, characterized in that the thickness of the cylinder wall of the striking sleeve (30; 130; 430) is between about 1.5 mm to 3 mm.

17. Anchoring element according to one of claims 1–16, characterized by an extension sleeve (440) which is provided with a preferably axially continuous internal thread (441) and, adjoining the end of the striking sleeve (430), can be put onto the end step (417) of the bolt (411), which end step (417) projects beyond the end of the striking sleeve (430).

18. Anchoring element according to one of claims 1–17, characterized in that the supporting surface (19) of the supporting body (20) is of conical design.

19. Anchoring element according to claim 18, characterized in that the point angle of the supporting surface (19) corresponds at least essentially to that of a drill bit which is used to make the bore (13).

20. Anchoring element according to claim 18 or 19, characterized in that the point angle is between a total angle of 120° and 130°.

21. Anchoring element according to one of claims 1–20, characterized in that the front end of the bolt (11) together with the taper (15), with regard to the outside diameter, is dimensioned to be just as large as the diameter of the bore (13) pertaining to the plug size.

22. Anchoring element according to one of claims 1–21, characterized in that the angle of slope of the taper (15; 215; 315; 415) on the bolt (11; 211; 311; 411) is between about 5° and 15° on one side.

23. Anchoring element according to one of claims 1–22, characterized in that the taper (215; 315), on its outer peripheral surface (224; 324), has recesses (225; 325) which form additional chip spaces receiving the cleared wall material of the bore.

24. Anchoring element according to claim 23, characterized in that the recesses (225) are designed as longitudinal slots which extend along individual cone-generating lines of the taper (215) and are run into the rotationally symmetric cupped portion (222).

25. Anchoring element according to claim 23, characterized in that the recesses (325) are designed as peripheral grooves which are provided at least on the axial region of the taper (315) which is closely adjacent to the rotationally symmetric cupped portion (322) adjoining the taper (315).

26. Anchoring element according to one of claims 1–25, characterized in that the taper (15; 115; 215), at least at its thickest point, is designed to be roughly star-shaped in cross-section or has longitudinal recesses and/or longitudinal prominences.

## Revendications

1. Elément d'ancrage comprenant un goujon (11) qui présente à l'extrémité de sa partie enfonçable dans un perçage (13) un corps d'appui (20) destiné à son appui axial sur le fond de la forure et un cône (15) qui se rétrécit dans le sens opposé à la direction d'enfoncement, ainsi qu'une douille de frappe (30) sur le goujon (11) présentant des languettes axiales (31) et des fentes (32) constituées entre celles-ci, dont les languettes (31) peuvent, lorsqu'elles atteignent le cône (15), se plier vers l'extérieur en raison du déplacement axial relatif entre le goujon (11) et la douille (30) et détachent avec leur extrémité libre la matière de la paroi du perçage (13), tandis qu'il est prévu, entre le cône (15) et le corps d'appui, un interstice de recueil de la matière de la paroi (23) détachée du perçage (13), caractérisé en ce que la partie du goujon (11) comprise entre le corps d'appui (20) et le cône (15) présente une partie de tête cylindrique (21), qui comporte une dépression (22, 222, 322, 422), laquelle constitue l'interstice de recueil des copeaux.

2. Elément d'ancrage selon la revendication 1, caractérisé en ce que le diamètre extérieur du cône (15) correspond en son endroit le plus épais au diamètre extérieur de la partie de tête (21).

3. Elément d'ancrage selon la revendication 1 ou 2, caractérisé en ce que le diamètre extérieur du cône (15, 215, 315, 415) est, dans la région de transition par rapport à la partie de tête (21) et sa dépression (22, 222, 322, 422), de dimensions au moins légèrement inférieures au diamètre extérieur voisin de la partie de tête (21), en constituant une zone de transition, qui se continue axialement dans la dépression (22, 222, 322, 422) et transfère à celle-ci la matière détachée (23).

4. Elément d'ancrage selon l'une des revendications 1 à 3, caractérisé en ce que les languettes (31, 131, 431) sont respectivement constituées à leur extrémité libre sous forme de burin plat.

5. Elément d'ancrage selon l'une des revendications 1 à 4, dont les languettes présentent respectivement sur la face antérieure de leur extrémité libre une surface oblique dirigée radialement de l'intérieur vers l'extérieur et vers l'avant, caractérisé en ce que la surface oblique (36) se transforme en une face avant (4) dirigée radialement.

6. Elément d'ancrage selon l'une des revendications 1 à 4, caractérisé en ce que les languettes ne présentent respectivement sur la face antérieure de leur extrémité libre qu'une surface s'étendant radialement.

7. Elément d'ancrage selon l'une des revendications 1 à 5, caractérisé en ce que les languettes (31) présentent au moins une rainure circulaire (37) sur la surface périphérique extérieure (35) de leur zone axiale antérieure.

8. Elément d'ancrage selon l'une des revendications 1 à 7, caractérisé en ce que les fentes (32, 132, 432) constituées entre les languettes (31, 431) sont réalisées à titre d'interstices de collecte de copeaux de la matière détachée de la paroi.

9. Elément d'ancrage selon l'une des revendications 1 à 8, caractérisé en ce que les fentes (32, 132, 432) constituées entre les languettes sont dans leurs dimensions plus étroites que les languettes, avec une largeur comprise de préférence entre 0,5 et 1 fois la largeur des languettes.

10. Elément d'ancrage selon l'une des revendications 1 à 9, caractérisé en ce que la douille de frappe (30, 130, 430) présente de quatre à douze languettes (31, 131, 431) environ.

11. Elément d'ancrage selon l'une des revendications 1 à 10, caractérisé en ce que la longueur axiale des languettes (31, 131, 431) est, respectivement, nettement supérieure dans son dimensionnement à celle du cône (15, 215, 315, 415) du goujon (11, 211, 311, 411).

12. Elément d'ancrage selon la revendication 11, caractérisé en ce que la longueur axiale des languettes (31, 131, 431) correspond environ au double de celle du cône (15, 215, 315, 415) du goujon (11, 211, 311, 411).

13. Elément d'ancrage selon l'une des revendications 1 à 12 dont la douille de frappe est constituée par une douille cylindrique fermée annulaire, caractérisé en ce que la douille (30, 130, 430) présente une section constante sur sa longueur.

14. Elément d'ancrage selon l'une des revendications 1 à 13, caractérisé en ce que le diamètre extérieur de la douille (30, 130, 430) est, pour l'essentiel, égal au diamètre du perçage respectif (13, 413) ou n'est que légèrement inférieur à celui-ci.

15. Elément d'ancrage selon l'une des revendications 1 à 14, caractérisé en ce que le diamètre intérieur de la douille (30, 130, 430) est, pour l'essentiel, égal au diamètre extérieur du cône (15, 215, 315, 415) à son endroit le plus mince ou n'est que sensiblement supérieur à celui-ci.

16. Elément d'ancrage selon l'une des revendications 1 à 15, caractérisé en ce que l'épaisseur de la paroi cylindrique de la douille (30, 130, 430) est comprise entre 1,5 mm et 3 mm.

17. Elément d'ancrage selon l'une des revendications 1 à 15, caractérisé par une douille de rallonge (440), qui est pourvue d'un filetage intérieur (441), de préférence continu axialement, et qui peut être fixée à l'extrémité de la douille de frappe (430), à la suite de l'appendice d'extrémité (417) du goujon (411) dépassant l'extrémité de la douille de frappe (430).

18. Elément d'ancrage selon l'une des revendications 1 à 17, caractérisé en ce que la surfaced'appui (19) du corps d'appui (20) est réalisée sous forme conique.

19. Elément d'ancrage selon la revendication 18, caractérisé en ce que l'angle au sommet de la surface d'appui (19) correspond, du moins pour l'essentiel, à celui d'un foret qui est utilisé pour l'exécution du perçage (13).

20. Elément d'ancrage selon la revendication 18 ou 19, caractérisé en ce que l'angle au sommet est compris entre 120° et 130° de l'angle total.

21. Elément d'ancrage selon l'une des revendications 1 à 20, caractérisé en ce que l'extrémité avant du goujon (11) avec le cône (15) a un diamètre extérieur de même dimension que le diamètre du perçage (13).

22. Elément d'ancrage selon l'une des revendications 1 à 21, caractérisé en ce que l'angle d'inclinaison du cône (15, 215, 315, 415) du goujon (11, 211, 311, 411) est compris d'un côté entre 5° et 15°.

23. Elément d'ancrage selon l'une des revendications 1 à 22, caractérisé en ce que le cône (215, 315) présente sur sa surface périphérique extérieure (224, 324) des gorges (225, 325) qui constituent des interstices supplémentaires pour recueillir la matière détachée de la paroi du perçage.

24. Elément d'ancrage selon la revendication 23, caractérisé en ce que les gorges (225) sont constituées par des fentes longitudinales qui s'étendent le long de plusieurs génératrices du cône (215) et sont amenées jusque dans la dépression (222) symétrique en rotation.

25. Elément d'ancrage selon la revendication 23, caractérisé en ce que les gorges (325) sont constituées par des rainures périphériques qui sont prévues au moins sur la zone axiale du cône (315) voisine de la dépression symétrique en rotation (322) qui lui fait suite.

26. Elément d'ancrage selon l'une des revendications 1 à 25, caractérisé en ce que le cône (15, 115, 215) est constitué, au moins dans son endroit le plus épais, d'une section sensiblementen forme d'étoiles ou présente des gorges et/ou des bossages longitudinaux.

Fig.1

Fig.2

Fig.3

Fig.4

Fig.5

Fig.6

Fig.7

Fig. 8

Fig. 9

Fig. 10

Fig. 11